# EUROPEAN PATENT SPECIFICATION

(11) **EP 3 468 342 B1**
(45) Date of publication and mention of the grant of the patent: **30.12.2020**
(21) Application number: 17810633.2
(22) Date of filing: 09.05.2017
(51) Int. Cl.: A01G 3/053

(54) **A BLADE ASSEMBLY FOR A CUTTING DEVICE AND A CUTTING DEVICE**
KLINGENANORDNUNG FÜR EINE SCHNEIDEVORRICHTUNG UND SCHNEIDEVORRICHTUNG
ENSEMBLE DE LAME POUR DISPOSITIF DE COUPE ET DISPOSITIF DE COUPE

(30) Priority: 08.06.2016 SE 1650802
(43) Date of publication of application: 17.04.2019
(73) Proprietor: Husqvarna AB, 561 82 Huskvarna (SE)
(72) Inventor: KNOPF, Daniel, 89233 Neu-Ulm (DE); LUGERT, Martin, 89312 Günzburg (DE); BESSERER, Bernhard, 89264 Weissenhorn (DE); LOCHER, Ottmar, 89079 Ulm-Donaustetten (DE)
(86) International application number: PCT/SE2017/050462
(87) International publication number: WO 2017/213567

(56) References cited:
- EP-A1- 0 820 692
- WO-A1-2011/029454
- DE-A1- 4 300 215
- GB-A- 2 383 249
- GB-A- 2 424 563
- US-A- 4 280 276
- US-A1- 2005 115 079

## Description

### TECHNICAL FIELD

Example embodiments generally relate to cutting devices having a blade assembly and, more particularly, relate to a blade assembly having both a trimming portion and a high-capacity trimming portion.

### BACKGROUND

Handheld cutting devices such as hedge trimmers, grass trimmers, edgers, grass shears, chainsaws, and/or the like, are often used to perform tasks relating to yard/grounds maintenance. For example, the blade assembly of the cutting devices may be used to trim or cut material or vegetation, such as trees, bushes, hedges, branches, grass, etc. When using the cutting device, most operators may find it difficult to cut or trim material or vegetation having a thicker diameter. If the operator proceeds with trying to cut the larger diameter material or vegetation with the cutting device, the material or vegetation may jam the cutting device. GB2383249 addresses this problem by means of a sawing section.

### BRIEF SUMMARY OF SOME EXAMPLES

The present invention addresses this problem by means of a blade assembly according to claim 1. The blade assembly includes a first elongated blade and a second elongated blade, where the first elongated blade and the second elongated blade each include a trimming portion and a high-capacity trimming portion. The trimming portion of each of the first elongated blade and the second elongated blade includes a set of trimming teeth. The high-capacity trimming portion of each of the first elongated blade and the second elongated blade includes one or more high-capacity trimming teeth that are longer than the trimming teeth. The high-capacity trimming portion of the first elongated blade or the second elongated blade further includes a first guide tooth, the first guide tooth being disposed on a first side of the one or more high-capacity trimming teeth of the first elongated blade or the second elongated blade. The high-capacity trimming portion of the first elongated blade or the second elongated blade further includes a second guide tooth, the second guide tooth being disposed on a second side, preferably opposite to the first side, of the one or more high-capacity trimming teeth of the first elongated blade or the second elongated blade. The first guide tooth and the second guide tooth are longer than the one or more high-capacity trimming teeth of the first elongated blade or the second elongated blade.

Some example additional optional features, structures, or modifications of the blade assembly may include that at least one of the first elongated blade or the second elongated blade is reciprocating. In some cases, both of the first elongated blade and the second elongated blade may be reciprocating. Alternatively or additionally, some embodiments may include that the trimming portion of each of the first elongated blade and the second elongated blade includes a first trimming portion and a second trimming portion, where the high-capacity trimming portion of each of the first elongated blade and the second elongated blade is located between the first trimming portion and the second trimming portion. In some cases, the high-capacity trimming portion of each of the first elongated blade and the second elongated blade may be located proximate an end of the first elongated blade and the second elongated blade. In a further example embodiment, the trimming portion of each of the first elongated blade and the second elongated blade may include a first trimming portion, a second trimming portion, and a third trimming portion, and the high-capacity trimming portion of each of the first elongated blade and the second elongated blade may include a first high-capacity trimming portion and a second high-capacity trimming portion, where the first high-capacity trimming portion may be located between the first trimming portion and the second trimming portion, and where the second high-capacity trimming portion may be located between the second trimming portion and the third trimming portion. Alternatively or additionally, the trimming teeth, the high-capacity trimming teeth, and the first and second guide tooth of each of the first elongated blade and the second elongated blade may each have a longitudinal axis extending substantially perpendicular to a longitudinal axis of the first elongated blade and the second elongated blade. In some cases, the one or more high-capacity trimming teeth of the first elongated blade and the second elongated blade may each have a sharpened tip end. In further example embodiments, the one or more high-capacity trimming teeth of the first elongated blade may each have a sharpened tip end. In even further example embodiments, the one or more high-capacity trimming teeth of the second elongated blade may each have a sharpened tip end. Alternatively or additionally, the trimming teeth of the first elongated blade or the second elongated blade may each have a sharpened tip end. In some cases, the trimming teeth of the first elongated blade and the second elongated blade may each have a sharpened tip end. In further example embodiments, the first guide tooth and the second guide tooth may each have a sharpened tip end. In some example embodiments, the first guide tooth and the second guide tooth may each have a dull tip end. Alternatively or additionally, the first guide tooth and the second guide tooth may be at least 20%, and preferably at least 30% longer than the one or more high-capacity trimming teeth of the first elongated blade and the second elongated blade. Alternatively or additionally, the first guide tooth and the second guide tooth may be at least 40%, and preferably at least 50% longer than the trimming teeth of the second elongated blade, Alternatively or additionally, the first guide tooth and the second guide tooth may be approximately at least 60%, and preferably at least 80% longer than the trimming teeth of the first elongated blade. Alternatively or additionally, the trimming teeth of the second elongated blade may be approximately 40% longer than the trimming teeth of the first elongated blade, Alternatively or additionally, the high-capacity trimming portion of the second elongated blade may further include a first guide tooth and a second guide tooth, where the high-capacity trimming portion of the second elongated blade may have only one high-capacity trimming tooth, and where the first guide tooth and the second guide tooth may flank the high-capacity trimming tooth of the second elongated blade. The high-capacity trimming portion may be located at a proximal end of the blade assembly. Such a location results in less stress on the relatively lower capacity trimming portion of the blade assembly, which can therefore be dimensioned accordingly.

In another example embodiment, a cutting device is provided. The cutting device may include a blade assembly operably coupled to a motor assembly. The blade assembly may include a first elongated blade and a second elongated blade, where the first elongated blade and the second elongated blade each include a trimming portion and a high-capacity trimming portion. The trimming portion of each of the first elongated blade and the second elongated blade may include a set of trimming teeth. The high-capacity trimming portion of each of the first elongated blade and the second elongated blade may include one or more high-capacity trimming teeth that are longer than the trimming teeth. The high-capacity trimming portion of the first elongated blade or the second elongated blade may further include a first guide tooth, the first guide tooth being disposed on a first side of the one or more high-capacity trimming teeth of the first elongated blade or the second elongated blade. The high-capacity trimming portion of the first elongated blade or the second elongated blade may further include a second guide tooth, the second guide tooth being disposed on a second side of the one or more high-capacity trimming teeth of the first elongated blade or the second elongated blade. The first guide tooth and the second guide tooth may be longer than the one or more high-capacity trimming teeth of the first elongated blade or the second elongated blade.

Some example additional optional features, structures, or modifications of the blade assembly of the cutting device may include that at least one of the first elongated blade or the second elongated blade is reciprocating. In some cases, both of the first elongated blade and the second elongated blade may be reciprocating. Alternatively or additionally, some embodiments may include that the trimming portion of each of the first elongated blade and the second elongated blade includes a first trimming portion and a second trimming portion, where the high-capacity trimming portion of each of the first elongated blade and the second elongated blade is located between the first trimming portion and the second trimming portion. In some cases, the high-capacity trimming portion of each of the first elongated blade and the second elongated blade may be located proximate an end of the first elongated blade and the second elongated blade. In a further example embodiment, the trimming portion of each of the first elongated blade and the second elongated blade may include a first trimming portion, a second trimming portion, and a third trimming portion, and the high-capacity trimming portion of each of the first elongated blade and the second elongated blade may include a first high-capacity trimming portion and a second high-capacity trimming portion, where the first high-capacity trimming portion may be located between the first trimming portion and the second trimming portion, and where the second high-capacity trimming portion may be located between the second trimming portion and the third trimming portion. Alternatively or additionally, the trimming teeth, the high-capacity trimming teeth, and the first and second guide tooth of each of the first elongated blade and the second elongated blade may each have a longitudinal axis extending substantially perpendicular to a longitudinal axis of the first elongated blade and the second elongated blade. In some cases, the one or more high-capacity trimming teeth of the first elongated blade and the second elongated blade may each have a sharpened tip end. In further example embodiments, the one or more high-capacity trimming teeth of the first elongated blade may each have a sharpened tip end. In even further example embodiments, the one or more high-capacity trimming teeth of the second elongated blade may each have a sharpened tip end. Alternatively or additionally, the trimming teeth of the first elongated blade or the second elongated blade may each have a sharpened tip end. In some cases, the trimming teeth of the first elongated blade and the second elongated blade may each have a sharpened tip end. In further example embodiments, the first guide tooth and the second guide tooth may each have a sharpened tip end. In some example embodiments, the first guide tooth and the second guide tooth may each have a dull tip end. Alternatively or additionally, the first guide tooth and the second guide tooth may be approximately 40% longer than the one or more high-capacity trimming teeth of the first elongated blade and the second elongated blade. Alternatively or additionally, the first guide tooth and the second guide tooth may be approximately 65% longer than the trimming teeth of the second elongated blade. Alternatively or additionally, the first guide tooth and the second guide tooth may be approximately 100% longer than the trimming teeth of the first elongated blade. Alternatively or additionally, the trimming teeth of the second elongated blade may be approximately 40% longer than the trimming teeth of the first elongated blade. Alternatively or additionally, the high-capacity trimming portion of the second elongated blade may further include a first guide tooth and a second guide tooth, where the high-capacity trimming portion of the second elongated blade may have only one high-capacity trimming tooth, and where the first guide tooth and the second guide tooth may flank the high-capacity trimming tooth of the second elongated blade.

Such a blade assembly of the cutting device may be used for hedge trimming at the trimming portion as well as the high-capacity trimming portion (i.e., along the entire length of the blade assembly). Moreover, the tooth structure of the high-capacity trimming portion permits cutting thicker branches than the tooth structure of the trimming portion. Additionally, the high-capacity trimming portion may also provide a higher cutting speed when trimming any size of branches. As the cutting of thicker branches may increase the load on the blade assembly, the division of the blade assembly into a high-capacity trimming portion and a trimming portion allows for dimensioning the entire cutting device for relatively thin twigs, which is beneficial from a weight/cost/ease of handling perspective, while still allowing for occasional cutting of thicker branches (e.g., one or a few at a time). Additionally, not providing the entire blade assembly with the high-capacity tooth structure of the high-capacity trimming portion reduces the total load that the blade assembly is likely to be exposed to.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a side view of a hedge trimmer having a conventional blade assembly;
FIG. 2 illustrates a blade assembly that may be configured in accordance with an example embodiment;
FIG. 3 illustrates a blade assembly in accordance with an example embodiment;
FIG. 4, which includes FIGS. 4A and 4B, illustrates a high-capacity trimming portion of a blade assembly in accordance with an example embodiment;
FIG. 5, which includes FIGS. 5A and 5B, illustrates a high-capacity trimming portion of a blade assembly in accordance with an example embodiment;
FIG. 6, which includes FIGS. 6A and 6B, illustrates a high-capacity trimming portion of a blade assembly in accordance with an example embodiment;
FIG. 7 illustrates a second elongated blade that may be configured in accordance with an example embodiment;
FIG. 8 illustrates a high-capacity trimming portion of a blade assembly in accordance with an example embodiment;
FIG. 9 illustrates a high-capacity trimming portion of a blade assembly in accordance with a further example embodiment;
FIG. 10 illustrates a blade assembly having an offset ground in accordance with an example embodiment; and
FIG. 11 illustrates a guide tooth of a first or second elongated blade that may be configured in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

Operators may prefer a cutting device that can not only effectively cut or trim material or vegetation having a smaller diameter but that also can effectively cut or trim material or vegetation having a larger diameter. Some example embodiments described herein provide a blade assembly for a cutting device where the blade assembly can effectively trim or cut material or vegetation having a variety of sizes, from small to large sized. Moreover, the blade assembly does not need any additional safety protection. Further, the blade assembly makes it easy for the operator to determine which part of the blade assembly should be used for trimming or cutting smaller sized material or vegetation, and which part should be used for trimming or cutting smaller and larger sized material or vegetation.

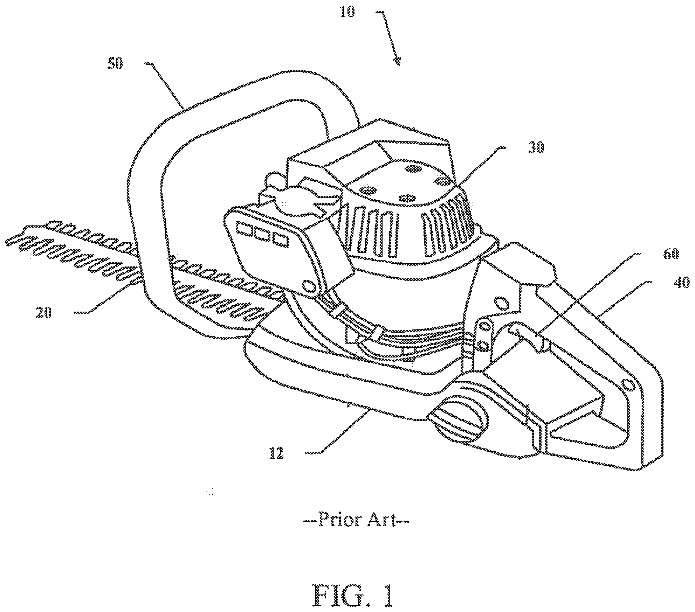

FIG. 1 illustrates an example of a trimmer 10 (e.g., a hedge trimmer) having a blade assembly 20 that is well-known in the art and is generally most effective for only cutting or trimming material or vegetation having a smaller diameter. As shown in FIG. 1, the trimmer 10 may include a body 12, a motor assembly 30, and a blade assembly 20. A power unit or motor assembly 30 of the trimmer 10 may be used to power movable cutters of the blade assembly 20 so that effective cutting may be employed relative to any vegetation or material that is between the fixed and movable cutters, or between two movable cutters in some cases. The motor assembly 30, in the shown embodiment, utilizes an internal combustion engine. However, any other suitable motor (e.g., an electric motor that is mains or battery powered) may be employed.

The trimmer 10 may also include a body 12. In an example embodiment, the body 12 may include a rear handle portion 40 and a front handle portion 50. An operator of the hedge trimmer 10 may use one hand to hold the front handle portion 50 and the other hand to hold the rear handle portion 40 while operating the trimmer 10. In some embodiments, the rear handle portion 40 may include a trigger 60 or other control mechanism for engaging operation of the motor assembly 30 to power the blade assembly 20. In some cases, the front handle portion 50 may also include a trigger or control mechanism. The rear handle portion 40 may be attached to a rear portion of the body 12 and the front handle portion 50 may be attached to a front portion of the body 12. In some embodiments, the body 12 may be formed from one or more plastic or other rigid components that may be molded to have a desired shape. The body 12 may substantially enclose the motor, gear assemblies, control circuitry and other internal components of the trimmer 10. In some embodiments, a hand guard (not shown) may be disposed between the blade assembly 20 and the portion of the body 12 that is proximate to the front handle 50. The hand guard may provide shielding for the operator's hand relative to any debris that may be projected back toward the body 12 during operation of the blade assembly 20. Other structures and arrangements for the trimmer 10 are also possible.

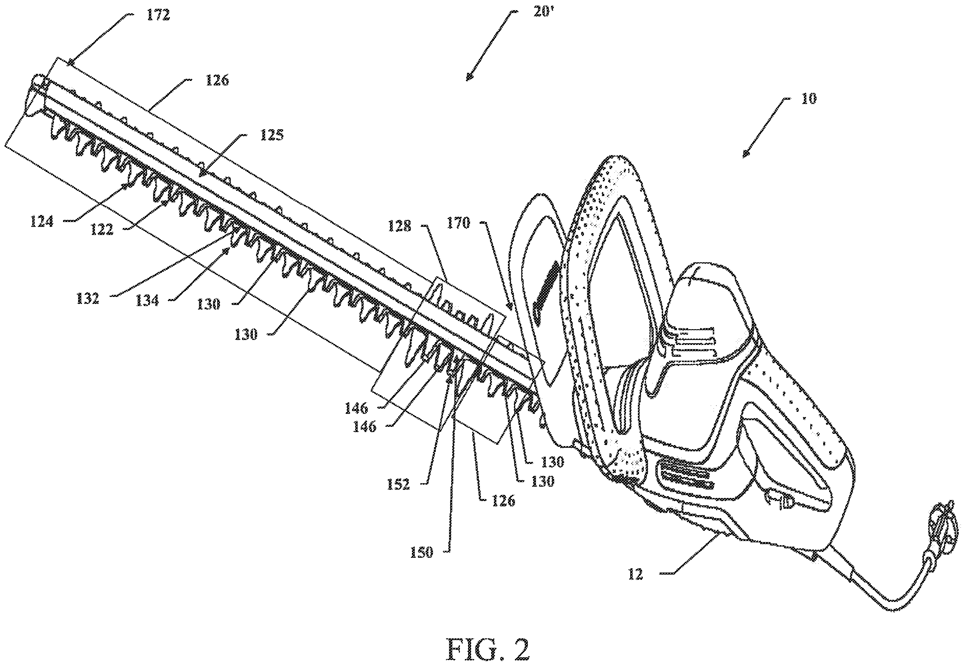

FIGS. 2-11 illustrate examples of the blade assembly 20' for a trimmer 10 that may be configured in accordance with example embodiments contained herein. It should be appreciated, however, that the trimmer 10 is merely one example of a cutting device that may be configured in accordance with an example embodiment. Further, it should be appreciated that the trimmer 10 could be gas or electric powered.

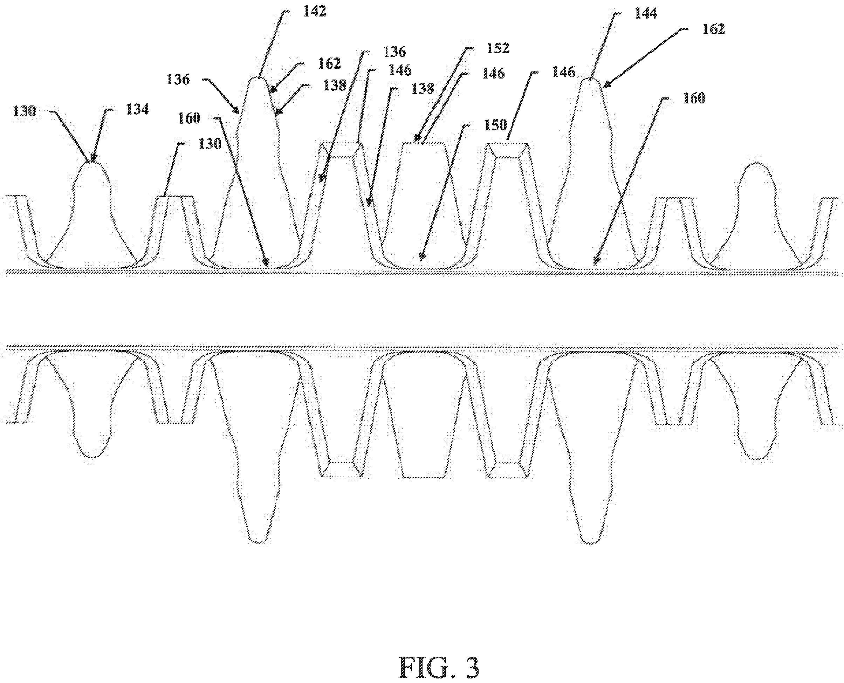

As shown in FIGS. 2 and 3, the blade assembly 20' may include a first elongated blade 122 and a second elongated blade 124. The first elongated blade 122 and the second elongated blade 124 may be operably coupled to a guide bar 125. The guide bar 125 may be operably coupled to the housing 12 of the trimmer 10.

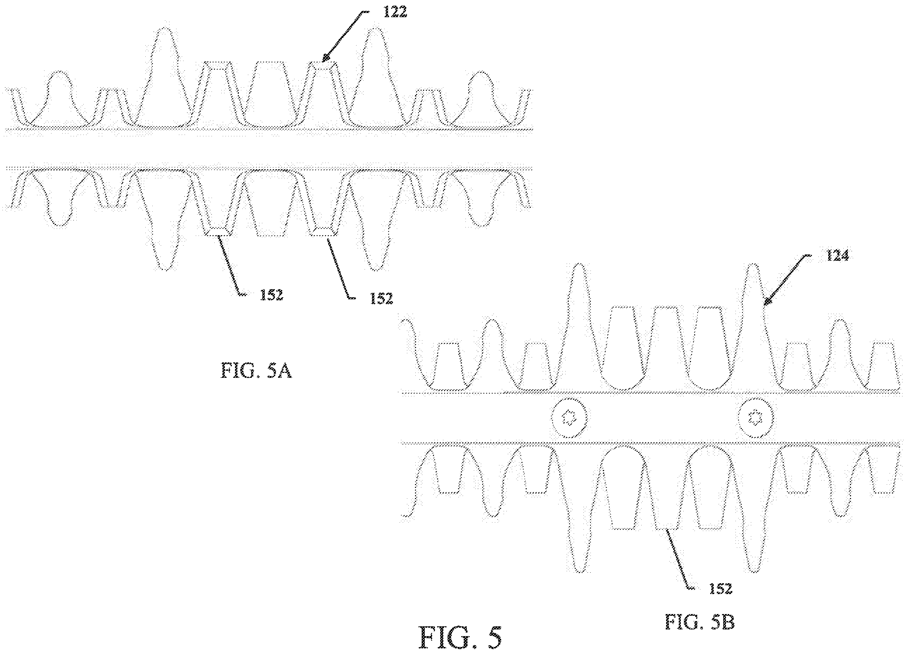

The first elongated blade 122 and the second elongated blade 124 may be operably coupled to each other and the guide bar 125 in a variety of ways. For example, bolts may be used to operably couple the first elongated blade 122, the second elongated blade 124, and the guide bar 125 together (see FIG. 5). Moreover, the first elongated blade 122 and the second elongated blade 124 may each have an interior surface and an exterior surface. The interior surface of the first elongated blade 122 extends along the longitudinal axis of the first elongated blade 122 and faces toward an interior surface of the second elongated blade 124 that extends along the longitudinal axis of the second elongated blade 124.

In an example embodiment, at least one of the first elongated blade 122 or the second elongated blade 124 is configured to oscillate or move back and forth along the longitudinal axis of the first elongated blade 122 or the second elongated blade 124. For example, the first elongated blade 122 may perform an oscillating movement, and the second elongated blade 124 may be stationary. In some cases, the first elongated blade 122 and the second cutting blade 124 may both perform an oscillating movement. In some example embodiments, the oscillating movement of the first elongated blade 122 or the second elongated blade 124 may be a linear oscillating movement. In further embodiments, at least one of the first elongated blade 122 or the second elongated blade 124 may be configured to reciprocate. For example, the first elongated blade 122 may perform a reciprocating movement, and the second elongated blade 124 may be stationary. In some cases, the first elongated blade 122 and the second elongated blade 124 may both perform a reciprocating movement along the longitudinal axis.

In an example embodiment, the first elongated blade 122 and the second elongated blade 124 may each have at least one trimming portion 126 and at least one high-capacity trimming portion 128. As shown in FIGS. 2 and 3, the blade assembly 20' may have one high-capacity trimming portion 128 surrounded on each side by a trimming portion 126. The trimming portion 126 may include trimming teeth 130 and may be used to shear off material or vegetation such as a bush, hedge, tree, grass, and/or the like. In some cases, the material or vegetation may be sheared off in a substantially non chip-generating manner. In some example embodiments, the trimming teeth 130 may be equally spaced along a portion of the longitudinal axis of the first elongated blade 122 and the second elongated blade 124. It should be understood that the gap between each of the trimming teeth or any other teeth disposed on the first elongated blade 122 or the second elongated blade 124 may be determined based on the power of the cutting device employed, In some cases, there will be 16mm to 34mm of gap or free space between each of the trimming teeth 130.

The trimming teeth 130 may each have a root end 132 and a tip end 134 and a longitudinal axis extending substantially perpendicular to the longitudinal axis of the first elongated blade 122 and the second elongated blade 124. The root end 132 may be operably coupled to the longitudinal axis of the first elongated blade 122 or the second elongated blade 124. The trimming teeth 130 of the first elongated blade 122 and the second elongated blade 124 may be shaped similarly in some example embodiments. However, as shown in FIGS. 2 and 3, the trimming teeth 130 of the first and second elongated blade 122 and 124 may be shaped differently, For example, the tip end 1 34 of the trimming teeth 130 of the first elongated blade 122 may be substantially squared-shaped and ground or sharpened, and the tip end 134 of the trimming teeth 130 of the second elongated blade 124 may be substantially rounded and be unground or dull. In other example embodiments, all of the trimming teeth 130 of the first elongated blade 122 and the second elongated blade 124 may have a sharp or ground first edge 136 or second edge 138. However, in some cases, the trimming teeth 130 of only the first elongated blade 122 or the second elongated blade 124 may have a ground first edge 136 or second edge 138. The determination of whether the tip end 134 and the first and second edge 136 and 138 of the trimming teeth 130 of the first elongated blade 122 or the second elongated blade 124 are ground or unground (i.e., sharp or dull) may be based on the motor speed of the cutting device or the blade assembly 20' reciprocating or oscillating speed. In some cases, the tip end 134 or the first edge 136 or second edge 138 of each of the trimming teeth 130 may be treated with hardening materials.

In one example embodiment, as shown in FIG. 3, the length of each of the trimming teeth 130 of the first elongated blade 122 may be substantially the same. However, in other example embodiments, each of trimming teeth 130 of the first elongated blade 122 may be have different lengths or alternating lengths. For example, a first and third trimming tooth 130, as numbered from a first end 170 of the blade assembly 20', may have a first length and the second and fourth trimming tooth 130 may have a second length. Even further, as shown in FIG. 3, the length of each of the trimming teeth 130 of the second elongated blade 124 may also have substantially the same length. However, as explained above, in some cases, each of the trimming teeth 130 of the second elongated blade 124 may have alternating lengths or different lengths. In some cases, the trimming teeth 130 of the first elongated blade 122 or the second elongated blade 124 may have substantially the same length. However, as shown in FIG. 3, the length of each of the trimming teeth 130, as measured from the root end 132 to the tip end 134, of the second elongated blade 124 may be longer than the trimming teeth 130 of the first elongated blade 122. In some cases, the length of each of the trimming teeth 130 of the second elongated blade 124 may be 40% longer than the trimming teeth 130 of the first elongated blade 122. In some example embodiments, the trimming teeth 130 of the second elongated blade 124 may be configured as safety teeth in accordance with the safeguard requirements from IEC 60745-2-15:2006.

The width of each of the trimming teeth 130 of the first elongated blade 122, as measured from the first edge 136 to the second edge 138, may be substantially the same along the length of each of the trimming teeth 130, However, in some cases, the width of each of the trimming teeth 130 may vary along the length of each of the trimming teeth 130. For example, the trimming teeth 130 of the second elongated blade 124 may have a first width proximate the root end 132 of each of the trimming teeth 130, a second width proximate the middle portion 'of each of the trimming teeth 130, and a third width proximate the tip end 134 of each of the trimming teeth 130. The first width may be greater than the second and third widths, and the third width may be less than the second width.

The high-capacity trimming portion 128 may include high-capacity trimming teeth 146 of the first elongated blade 122 and the second elongated blade 124. The high-capacity trimming teeth 146 may be used to shear off material or vegetation, such as a bush, hedge, tree, and/or the like having a thicker diameter, in a substantially non chip-generating manner. Therefore, the term "high-capacity trimming" should be understood to mean the ability to cut or trim thicker material or vegetation. However, it should be understood that the high-capacity trimming portion 128 is not strictly limited to cutting material or vegetation having a thicker diameter. The high-capacity trimming portion 128 may still function in accordance with the trimming portion 126 (i.e., having the ability to cut material or vegetation having a relatively thinner diameter). In some cases, when the operator is using the high-capacity trimming portion 128, the motor speed of the cutting device 10 (i.e., the strokes per minute of the blade assembly 20') may be adjustable to adapt to the thicker material being trimmed or cut. In particular, in some example embodiments, a speed regulator may be disposed on the cutting device 10. The speed regulator may be configured to adjust the motor speed/stroke speed of the blade assembly 20'. Thereby, if an operator wishes to increase the motor speed when cutting vegetation having a thicker diameter (i.e., when using the high-capacity trimming portion 128), the operator may have the ability to control the speed of the blade assembly 20'.

In some example embodiments, the first elongated blade 122 may include two high-capacity trimming teeth 146 along one side of the blade assembly, and the second elongated blade 124 may include only one high-capacity trimming tooth 146 along said side of the blade assembly. It should be understood that the high-capacity trimming portion 128 of each of the first elongated blade 122 and the second elongated blade 124 may include less or more high-capacity trimming teeth 146 (see FIGS, 8 and 9). However, when the high-capacity trimming portion 128 is limited to a relatively small portion or portions of the blade assembly 20', the entire cutting device 10 does not need to be dimensioned in order to cut the larger or tougher material or vegetation. Accordingly, the cutting device 10 has a desirable weight and ease of use while still being easy to handle and relatively inexpensive. In some cases, the high-capacity trimming portion 128 may extend along less than 50% of the blade assembly 20', In other cases, the high-capacity trimming may extend along 30% or less of the blade assembly 20',

The high-capacity trimming teeth 146 may be equally spaced along a portion of the longitudinal axis of the first elongated blade 122 and the second elongated blade 124. The high-capacity trimming teeth 146 may each have a root end 150 and a tip end 152 and a longitudinal axis extending substantially perpendicular to the longitudinal axis of the first elongated blade 122 and the second elongated blade 124. The root end 150 may be operably coupled to the longitudinal axis of the first elongated blade 122 or the second elongated blade 124. As shown in FIGS. 2 and 3, the high-capacity trimming teeth 146 of the first elongated blade 122 and the second elongated blade 124 may be shaped similarly. For example, the tip end 152 of each of the high-capacity trimming teeth 146 may be substantially squared-shaped.

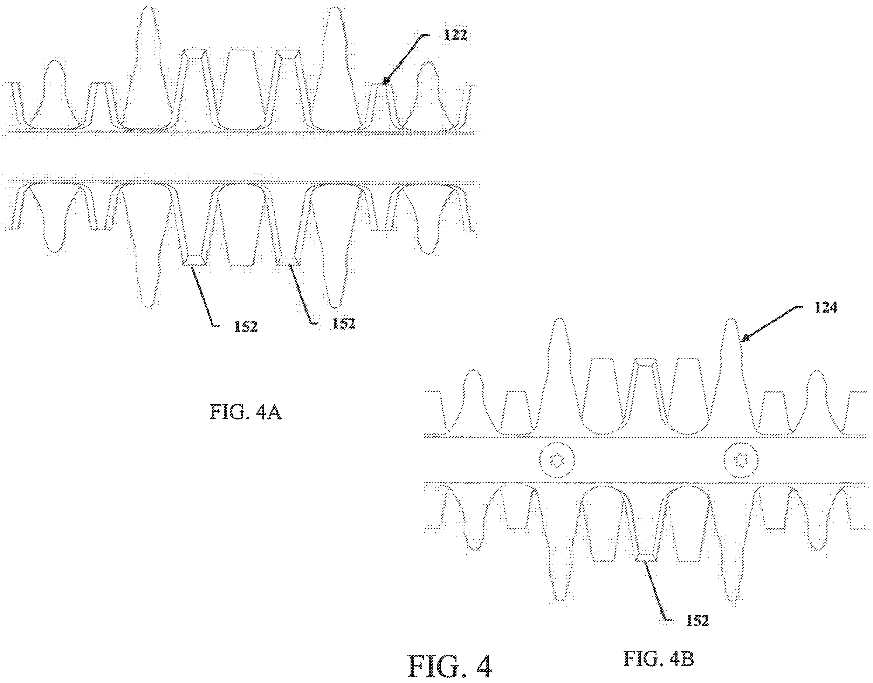

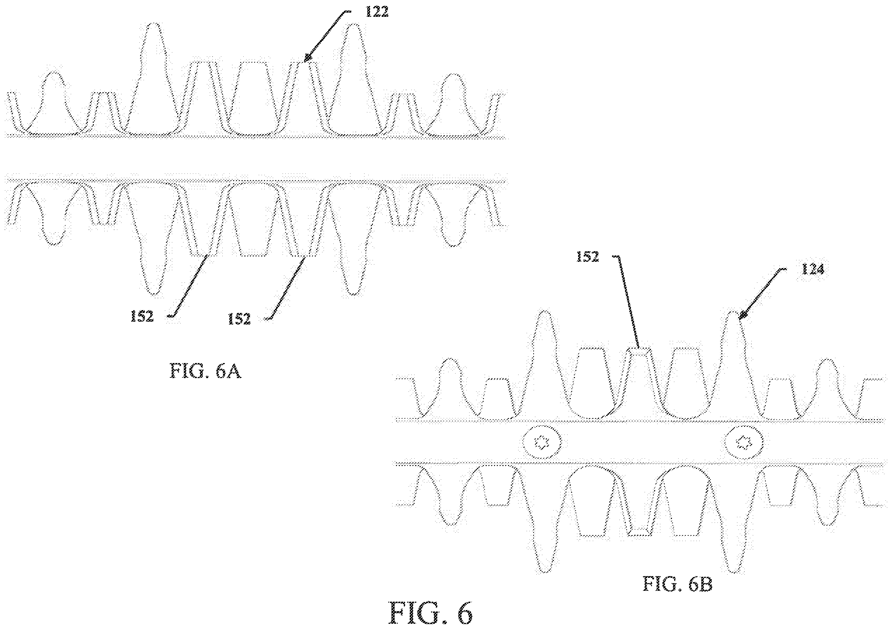

In some cases, as shown in FIG. 3, all of the high-capacity trimming teeth 146 of the first elongated blade 122 may have a sharp or ground tip end 152. However, as shown in FIGS. 4A and 4B, all of the high-capacity trimming teeth 146 of the first elongated blade 122 and the second elongated blade 124 may have a ground or sharpened tip end 152. In a further example embodiment, as shown in FIGS. 5A and 5B, the high-capacity trimming tooth or teeth 146 on the first elongated blade 122 may each have a ground or sharpened tip end 152, and the high-capacity trimming tooth 146 on the second elongated blade 124 may have an unground or dull tip end 152. In an even further example embodiment, as shown in FIGS. 6A and 6B, the high-capacity trimming teeth 146 on the first elongated blade may each have an tmground or dull tip end 152, and the high-capacity trimming tooth 146 on the second elongated blade may have a ground or sharpened tip end 152. Moreover, some or all of the high-capacity trimming teeth 146 may also have the ground first edge 136 or a ground second edge 138. The determination of which high-capacity trimming teeth 146 of the first elongated blade 122 and the second elongated blade 124 are ground or unground (i.e., sharp or dull) may be based on the motor speed of the cutting device 10 or the blade assembly 20' reciprocating or oscillating speed.

In one example embodiment, as shown in FIG. 3, the width of each of the high-capacity trimming teeth 146 of the first elongated blade 122 and the second elongated blade 124, as measured from the first edge 136 to the second edge 138, may be substantially the same along the length of each of the high-capacity trimming teeth 146. The length of each of the high-capacity trimming teeth 146 of the first elongated blade 122 and the second elongated blade 124 may be substantially the same. The length of each of the high-capacity trimming teeth 146 of the first elongated blade 122 and the second elongated blade 124 may be longer than the trimming teeth 120 of the first elongated blade 122 and the second elongated blade 124. In some cases, the high-capacity trimming teeth 146 may be 25% to 50% longer than the trimming teeth 130. For example, as shown in FIG. 2, the high-capacity trimming teeth 146 may be approximately 25% longer than trimming teeth 130 of the second elongated blade 124 and 50% longer than the trimming teeth 130 of the first elongated blade 122.

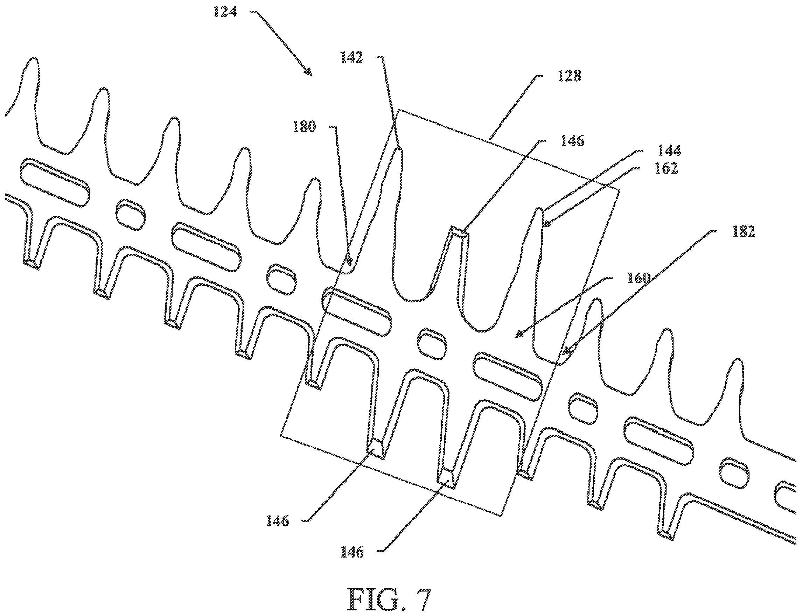

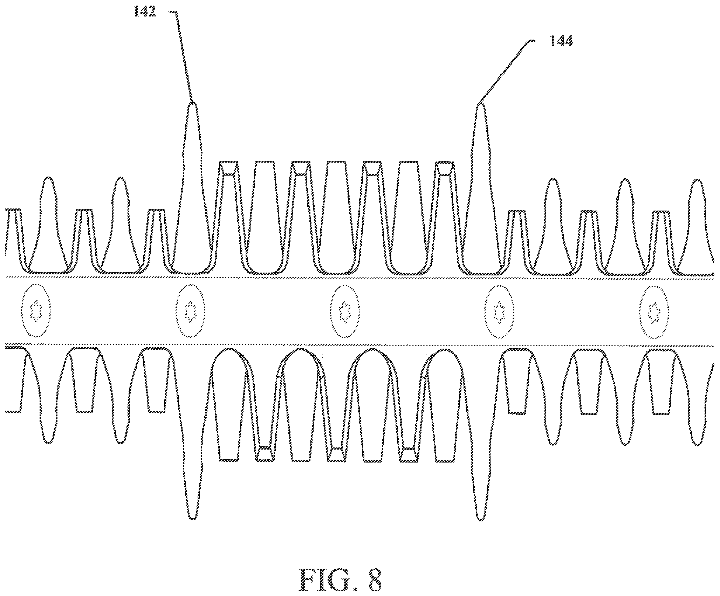

As shown in FIG. 7, the high-capacity trimming portion 128 of the second elongated blade 124 may also include a first guide tooth 142 and a second guide tooth 144 and a set of high-capacity trimming teeth 146. The first and second guide tooth 142 and 144 may be used as safety teeth and to hold the vegetation, material, or the like (e.g., a limb or branch) in place while trimming or cutting. Moreover, the guide teeth 142 and 144 may help the operator to readily distinguish which portion of the blade assembly 20' is the high-capacity trimming portion 128. In some example embodiments, such as in FIGS, 7 and 8, the first guide tooth 142 may be disposed on a first side 180 of the high-capacity trimming teeth 146 of the second elongated blade 124, and the second guide tooth 144 may be disposed on a second side 182 of the high-capacity trimming teeth 146 of the second elongated blade 124. Accordingly, the first and second guide teeth 142, 144 may form a boundary for the high-capacity trimming portion 128. While FIGS. 7 and 8 show the first and second guide teeth 142, 144 being disposed on the second elongated blade 124, it should be understood that the first guide tooth 142 may be disposed on the first elongated blade 122 or the second elongated blade 124, and the second guide tooth 144 may be disposed on the first elongated blade 122 or the second elongated 124. Moreover, even when the first guide tooth 142 and the second guide tooth 144 are disposed on different blades, the first guide tooth 142 may be disposed on the first side 180 of the high-capacity trimming teeth 146 of the first or second elongated blade 122, 124, and the second guide tooth 144 may be disposed on the second side 182 of the high-capacity trimming teeth of the first or second elongated blade 122, 124. Using the blade type illustrated in Fig. 7, the first and second blades 122, 124 may be identical.

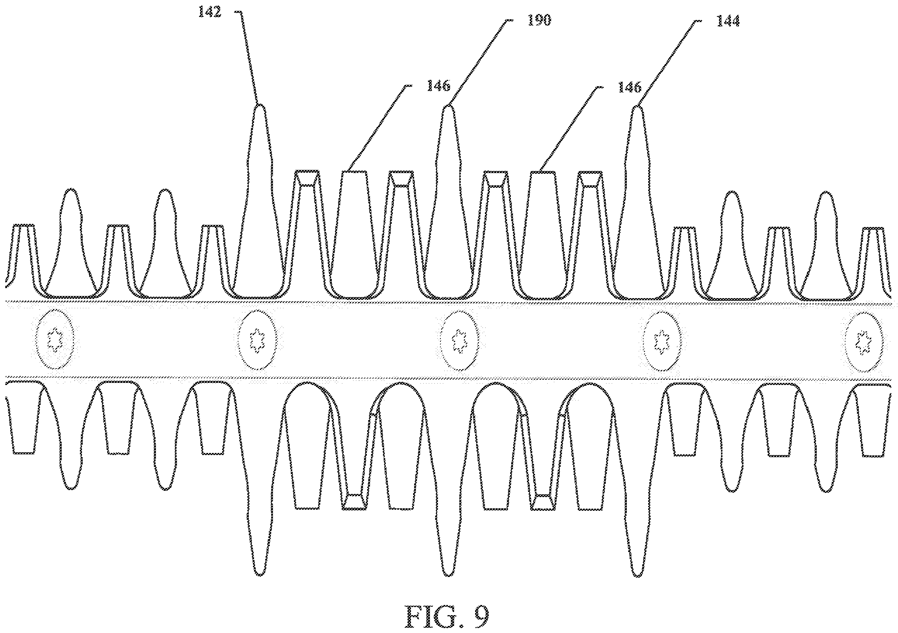

As shown in FIG. 9, some example embodiments of the high-capacity trimming portion 128 may also include a third guide tooth 190. In embodiments where the high-capacity trimming portion 128 includes a third guide tooth 190, the first and second guide tooth 142 and 144 may still be disposed on a first side 180 and second side 182 of the high-capacity trimming teeth 146, respectively; however, a third guide tooth 190 may be disposed proximate the center of the high-capacity trimming portion 128. In some cases, the third guide tooth 190 may be disposed between or in the center of a first and second high-capacity trimming tooth 146 of the second elongated blade 124.

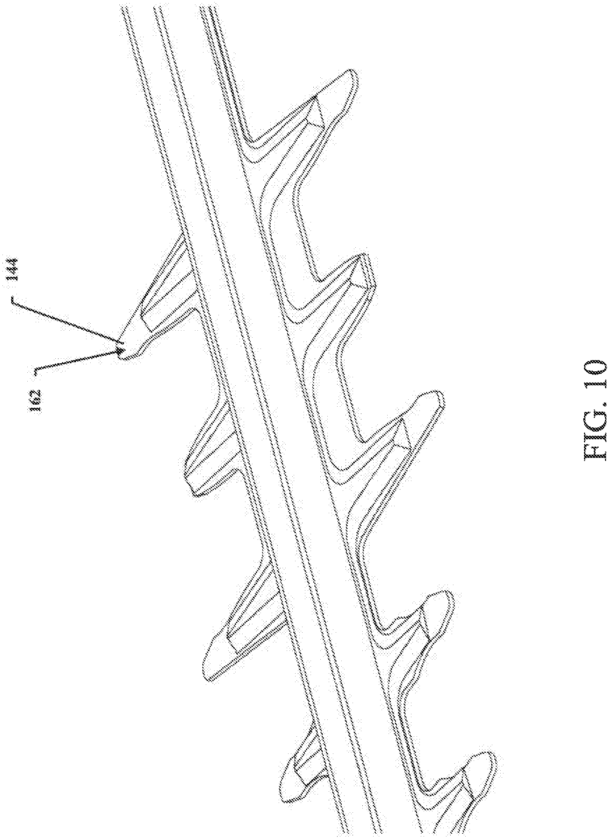

The first and second guide teeth 142 and 144 may each have a root end 160 and a tip end 162 and a longitudinal axis extending substantially perpendicular to the longitudinal axis of the first elongated blade 122 and the second elongated blade 124. The root end 160 may be operably coupled to the longitudinal axis of the second elongated blade 124. The first guide tooth 142 and the second guide tooth 144 may be shaped similarly. For example, the tip end 162 of the first and second ground teeth 142 and 144 may be substantially rounded and have an unground tip end 162 and first edge 136 and second edge 138. However, in other cases, the first and second guide teeth 142 and 144 may have a ground tip end 162 and first edge 136 and second edge 138, or in some cases, as shown in FIG. 10, have an offset ground.

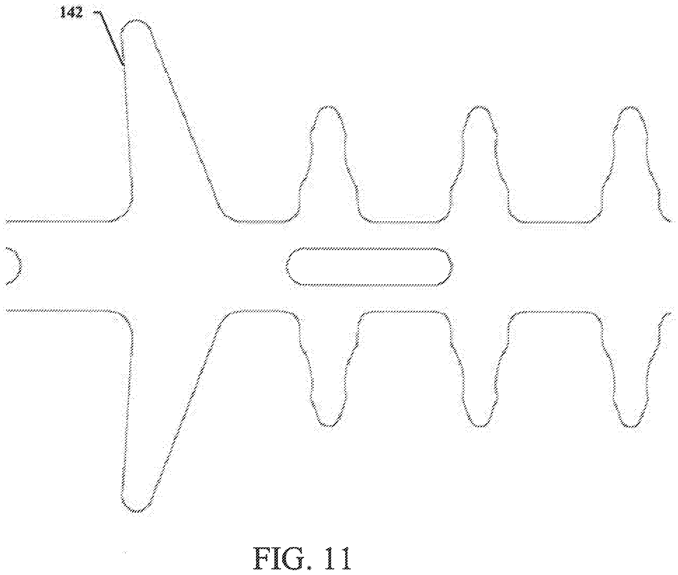

As shown in FIG.7, the width of each of the first and second guide teeth 142 and 144 may vary along the length of each of the first and second guide teeth 142 and 144. For example, the first and second guide teeth 142 and 144 may each have a first width proximate the root end 160, a second width proximate the middle portion, and a third width proximate the tip end 162. The first width may be greater than the second and third widths, and the third width may be less than the second width. In other examples, as shown in FIG. 11, the width of the first and second guide teeth 142, 144 may have a first width proximate the root end 160, and the width of the first and second guide teeth 142, 144 may decrease gradually as the length of the first and second guide tooth 142, 144 extends to the tip end 162 (see FIG. 11).

In some example embodiments, as shown in FIG. 11, the first and second guide teeth 142 and 144 may be shaped such that they are disposed at angle relative to the longitudinal axis of the first or second elongated blade 122 and 124. Accordingly, the longitudinal axis of the first and second guide tooth 142 and 144 may have a predetermined angle relative to the longitudinal axis of the first or second elongated blade 122 and 124. For example, in some cases, the first and second guide teeth 142 and 144 may each form an acute angle relative to the longitudinal axis of the first or second elongated blade 122 and 124. As shown in any of FIGS. 7-11, the length of each of the first and second guide teeth 142 and 144 may be substantially the same. In some cases, the length of each of the first and second guide teeth 142 and 144 may be longer than the trimming teeth 130 and the high-capacity trimming teeth 146 of the first elongated blade 122 and the second elongated blade 124. In some cases, the first and second ground teeth 142 and 144 may be approximately 40% longer than the high-capacity trimming teeth 146, and 65% to 100% longer than the trimming teeth 130, For example, as shown in FIG, 2, the first and second guide teeth 142 and 144 may be approximately 65% longer than trimming teeth of the second elongated blade 124 and 100% longer than the trimming teeth of the first elongated blade 122. By having a first and second guide tooth 142 and 144 that flanks shorter high-capacity trimming teeth 146, the material or vegetation that is being cut or trimmed will stay in the high-capacity trimming portion. Moreover, the guide teeth 142, 144 fulfill the safeguard requirements from IEC 60745-2-1 5:2006, while still allowing for occasional cutting of thicker branches (e.g., one or a few at a time) without using an additional safeguard (i.e., "fishbone"). Additionally, the teeth positioning of the first and second elongated blade 122 and 124 is beneficial from a weight/cost/ease of handling perspective. It should be understood that the teeth of each trimming portion 126 and high-capacity trimming portion 128 of each the first elongated blade 122 and the second elongated blade 124 may have a distinct shape, length, and width. Moreover, the trimming portion 126 and high-capacity trimming portion 128 of each the first elongated blade 122 and the second elongated blade 124 may have a distinct gap or free space between each of the teeth of the trimming portion 126 and the high-capacity trimming portion 128.

In some cases, the high-capacity trimming portion 128 of both the first elongated blade 122 and the second elongated blade 124 may be disposed proximate the center of the first elongated blade 122 and the second elongated blade 124. Therefore, the high-capacity trimming portion 128 may be located between a first trimming portion and a second trimming portion. In other cases, however, the high-capacity trimming portion 128 of both the first elongated blade 122 and the second elongated blade 124 may be disposed proximate a first, proximal end 170 of the blade assembly 20' or a second, distal end 172 of the blade assembly 20'. In some cases, even if the high-capacity trimming portion 128 is located proximate a first end 170 or a second end 172 of the blade assembly 20', the high-capacity trimming portion 128 may still be located between a first trimming portion and a second trimming portion.

In even further example embodiments, a first trimming portion may be disposed proximate the center of the first elongated blade 122 and the second elongated blade 124, and a second trimming portion disposed at the first end 170 and a third trimming portion disposed at the second end 172. Therefore, a first high-capacity trimming portion may be disposed between the first and second trimming portions of the first elongated blade 122 and the second elongated blade 124, and a second high-capacity trimming portion may be disposed between the second and third trimming portions of the first elongated blade 122 and the second elongated blade 124. Accordingly, the operator may have more than one high-capacity trimming portion 128 to utilize for cutting or trimming material or vegetation having a larger diameter.

The embodiments of the first elongated blade 122 and the second elongated blade 124 described above describe only one side of the first elongated blade 122 and the second elongated blade 124, where a side is defined as either the left or right side of the longitudinal axis of the first elongated blade 122 or the second elongated blade 124. However, as shown in FIG. 2, the first elongated blade 122 and the second elongated blade 124 may each include a first side and a second side, where the first side and the second side are disposed on opposing sides of the longitudinal axis of the respective first elongated blade 122 or the second elongated 124. The second side of the first elongated blade 122 and the second elongated blade 124 may have a corresponding or analogous trimming portion 126 and high-capacity trimming portion 128 as the first side described in the example embodiments above. In other words, the first and second side of each of the first elongated blade 122 and the second elongated blade 124 may be mirror images. However, in some cases, only the first side or the second side of both the first elongated blade 122 and the second elongated blade 124 may have one or more high-capacity trimming portions 128. In other words, only one side of the first and second elongated blade 122 and 124 may have at least one high-capacity trimming portion 128, and the other side of the first and second elongated blade 122 and 124 may form just one trimming portion 126.

As such, a blade assembly, or a cutting device having a blade assembly, of an example embodiment may be operably coupled to a motor assembly. The blade assembly may include a first elongated blade and a second elongated blade, where the first elongated blade and the second elongated blade each include a trimming portion and a high-capacity trimming portion. The trimming portion of each of the first elongated blade and the second elongated blade may include a set of trimming teeth. The high-capacity trimming portion of each of the first elongated blade and the second elongated blade may include one or more high-capacity trimming teeth that are longer than the trimming teeth. The high-capacity trimming portion of the first elongated blade or the second elongated blade may further include a first guide tooth, the first guide tooth being disposed on a first side of the one or more high-capacity trimming teeth of the first elongated blade or the second elongated blade. The high-capacity trimming portion of the first elongated blade or the second elongated blade may further include a second guide tooth, the second guide tooth being disposed on a second side of the one or more high-capacity trimming teeth of the first elongated blade or the second elongated blade. The first guide tooth and the second guide tooth may be longer than the one or more high-capacity trimming teeth of the first elongated blade or the second elongated blade.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims, Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A blade assembly (20) comprising:
a first elongated blade (122) and a second elongated blade (124), wherein the first elongated blade (122) and the second elongated blade (124) each comprise a trimming portion (126) and a high-capacity trimming portion (128), the trimming portion (126) of each of the first elongated blade (122) and the second elongated blade (124) comprising a set of trimming teeth (130), and the high-capacity trimming portion (128) of each of the first elongated blade (122) and the second elongated blade (124) comprising one or more high-capacity trimming teeth (146) that are longer than the trimming teeth (130), and
wherein the high-capacity trimming portion (128) of the first elongated blade (122) or the second elongated blade (124) further comprises a first guide tooth (142), the first guide tooth (142) being disposed on a first side (180) of the one or more high-capacity trimming teeth (146) of the first elongated blade (122) or the second elongated blade (124),
wherein the high-capacity trimming portion (128) of the first elongated blade (122) or the second elongated blade (124) further comprises a second guide tooth (144), the second guide tooth (144) being disposed on a second side (182) of the one or more high-capacity trimming teeth (146) of the first elongated blade (122) or the second elongated blade (124), and
wherein the first guide tooth (142) and the second guide tooth (144) are longer than the one or more high-capacity trimming teeth (146) of the first elongated blade (122) and the second elongated blade (124).

2. The blade assembly of claim 1, wherein the trimming portion (126) of each of the first elongated blade (122) and the second elongated blade (124) includes a first trimming portion and a second trimming portion, and wherein the high-capacity trimming portion (128) of each of the first elongated blade (122) and the second elongated blade (124) is located between the first trimming portion and the second trimming portion.

3. The blade assembly of claim 1, wherein the high-capacity trimming portion (128) of each of the first elongated blade (122) and the second elongated blade (124) is located proximate an end (170 or 172) of the first elongated blade (122) and the second elongated blade (124).

4. The blade assembly of any of claims 1-3, wherein the one or more high-capacity trimming teeth (146) of the first elongated blade (122) and the second elongated blade (124) each have a sharpened tip end (152).

5. The blade assembly of any of claims 1-3, wherein the one or more high-capacity trimming teeth (146) of the first elongated blade (122) each have a sharpened tip end (152).

6. The blade assembly of any of claims 1-3, wherein the one or more high-capacity trimming teeth (146) of the second elongated blade (124) each have a sharpened tip end (152).

7. The blade assembly of any of claims 1-6, wherein the trimming teeth (130) of the first elongated blade (122) or the second elongated blade (124) each have a sharpened tip end (134).

8. The blade assembly of any of claims 1-6, wherein the trimming teeth (130) of the first elongated blade (122) and the second elongated blade (124) each have a sharpened tip end (134).

9. The blade assembly of any of claims 1-8, wherein the first guide tooth (142) and the second guide tooth (144) each have a sharpened tip end (162).

10. The blade assembly of any of claims 1-8, wherein the first guide tooth (142) and the second guide tooth (144) each have a dull tip end (162).

11. The blade assembly of any of claims 1-10, wherein the first guide tooth (142) and the second guide tooth (144) are at least 30% longer than the one or more high-capacity trimming teeth (146) of the first elongated blade (122) and the second elongated blade (124).

12. The blade assembly of any of claims 1-11, wherein the first guide tooth (142) and the second guide tooth (144) are at least 40% longer than the trimming teeth (130) of the second elongated blade (124).

13. The blade assembly of any of claims 1-12, wherein the first guide tooth (142) and the second guide tooth (144) are at least 60% longer than the trimming teeth (130) of the first elongated blade (122), wherein the trimming teeth (130) of the second elongated blade (124) are approximately 40% longer than the trimming teeth (130) of the first elongated blade (122), and wherein the first guide tooth (142) and the second guide tooth (144) are approximately the same length.

14. The blade assembly of any of claims 1-13, wherein the high-capacity trimming portion (128) of the second elongated blade (124) has only one high-capacity trimming tooth (146), and wherein the first guide tooth (142) and the second guide tooth (144) flank the high-capacity trimming tooth (146) of the second elongated blade (124),

15. A cutting device comprising:
a motor assembly (30); and
a blade assembly (20) according to any of the preceding claims.

## Patentansprüche

1. Klingenanordnung (20), die Folgendes umfasst:
eine erste längliche Klinge (122) und eine zweite längliche Klinge (124), wobei die erste längliche Klinge (122) und die zweite längliche Klinge (124} jeweils einen Trimmabschnitt (126) und einen Hochleistungs-Trimmabschnitt (128) umfassen; wobei der Trimmabschnitt (126) der ersten länglichen Klinge (122) und der zweiten länglichen Klinge (124) einen Satz von Trimmzähnen (130) umfasst, und wobei der Hochleistungs-Trimmabschnitt (128) der ersten länglichen Klinge (122) und der zweiten länglichen Kling (124) einen oder mehrere Hochleistungs-Trimmzähne (146) umfasst, die länger als die Trimmzähne (130) sind, und
wobei der Hochleistungs-Trimmabschnitt (128) der ersten länglichen Klinge (122) oder der zweiten länglichen Klinge (124) ferner einen ersten Führungszahn (142) umfasst, wobei der erste Führungszahn (142) auf einer ersten Seite (180) des einen oder der mehreren Hochleistungs-Trimmzähne (146) der ersten länglichen Klinge (122) oder der zweiten länglichen Klinge (124) angeordnet ist,
wobei der Hochleistungs-Trimmabschnitt (128) der ersten länglichen Klinge (122) oder der zweiten länglichen Klinge (124) ferner einen zweiten Führungszahn (144) umfasst, wobei der zweite Führungszahn (144) auf einer zweiten Seite (182) des einen oder der mehreren Hochleistungs-Trimmzähne (146) der ersten länglichen Klinge (122) oder der zweiten länglichen Klinge (124) angeordnet ist, und
wobei der erste Führungszahn (142) und der zweite Führungszahn (144) länger sind als der eine oder die mehreren Hochleistungs-Trimmzähne (146) der ersten länglichen Klinge (122) und der zweiten länglichen Klinge (124).

2. Klingenanordnung nach Anspruch 1, wobei der Trimmabschnitt (126) der ersten länglichen Klinge (122) und der zweiten länglichen Klinge (124) einen ersten Trimmabschnitt und einen zweiten Trimmabschnitt umfasst, und wobei der Hochleistungs-Trimmabschnitt (128) der ersten länglichen Klinge (122) und der zweiten länglichen Klinge (124) zwischen dem ersten Trimmabschnitt und dem zweiten Trimmabschnitt angeordnet ist.

3. Klingenanordnung nach Anspruch 1, wobei sich der Hochleistungs-Trimmabschnitt (128) der ersten länglichen Klinge (122) und der zweiten länglichen Klinge (124) nahe einem Ende (170 oder 172) der ersten länglichen Klinge (122) und der zweiten länglichen Klinge (124) befindet.

4. Klingenanordnung nach einem der Ansprüche 1 bis 3, wobei der eine oder die mehreren Hochleistungs-Trimmzähne (146) der ersten länglichen Klinge (122) und der zweiten länglichen Klinge (124) jeweils ein geschärftes Spitzenende (152) aufweisen.

5. Klingenanordnung nach einem der Ansprüche 1 bis 3, wobei der eine oder die mehreren Hochleistungs-Trimmzähne (146) der ersten länglichen Klinge (122) jeweils ein geschärftes Spitzenende (152) aufweisen.

6. Klingenanordnung nach einem der Ansprüche 1 bis 3, wobei der eine oder die mehreren Hochleistungs-Trimmzähne (146) der zweiten länglichen Klinge (124) jeweils ein geschärftes Spitzenende (152) aufweisen.

7. Klingenanordnung nach einem der Ansprüche 1 bis 6, wobei die Trimmzähne (130) der ersten länglichen Klinge (122) oder der zweiten länglichen Klinge (124) jeweils ein geschärftes Spitzenende (134) aufweisen.

8. Klingenanordnung nach einem der Ansprüche 1 bis 6, wobei die Trimmzähne (130) der ersten länglichen Klinge (122) und der zweiten länglichen Klinge (124) jeweils ein geschärftes Spitzenende (134) aufweisen.

9. Klingenanordnung nach einem der Ansprüche 1 bis 8, wobei der erste Führungszahn (142) und der zweite Führungszahn (144) jeweils ein geschärftes Spitzenende (162) aufweisen.

10. Klingenanordnung nach einem der Ansprüche 1 bis 8, wobei der erste Führungszahn (142) und der zweite Führungszahn (144) jeweils ein stumpfes Spitzenende (162) aufweisen.

11. Klingenanordnung nach einem der Ansprüche 1 bis 10, wobei der erste Führungszahn (142) und der zweite Führungszahn (144) mindestens 30 % länger sind als der eine oder die mehreren Hochleistungs-Trimmzähne (146) der ersten länglichen Klinge (122) und der zweiten länglichen Klinge (124).

12. Klingenanordnung nach einem der Ansprüche 1 bis 11, wobei der erste Führungszahn (142) und der zweite Führungszahn (144) mindestens 40 % länger sind als die Trimmzähne (130) der zweiten länglichen Klinge (124).

13. Klingenanordnung nach einem der Ansprüche 1 bis 12, wobei der erste Führungszahn (142) und der zweite Führungszahn (144) mindestens 60% länger sind als die Trimmzähne (130) der ersten länglichen Klinge (122). wobei die Trimmzähne (130) der zweiten länglichen Klinge (124) etwa 40% länger sind als die Trimmzähne (130) der ersten länglichen Klinge (122) und wobei der erste Führungszahn (142) und der zweite Führungszahn (144) etwa gleich lang sind.

14. Klingenanordnung nach einem der Ansprüche 1 bis 13, wobei der Hochleistungs-Trimmabschnitt (128) der zweiten länglichen Klinge (124) nur einen Hochleistungs-Trimmzahn (146) aufweist und wobei der erste Führungszahn (142) und der zweite Führungszahn (144) den Hochleistungs-Trimmzahn (146) der zweiten länglichen Klinge (124) flankieren.

15. Schneidvorrichtung, die Folgendes umfasst:
eine Motoranordnung (30); und
eine Klingenanordnung (20) nach einem der vorhergehenden Ansprüche.

## Revendications

1. Ensemble de lames (20), comprenant :
une première lame allongée (122) et une seconde lame allongée (124), dans lequel la première lame allongée (122) et la seconde lame allongée (124) comprennent chacune une partie de taillage (126) et une partie de taillage de haute capacité (128), la partie de taillage (126) de chacun de la première lame allongée (122) et de la seconde lame allongée (124) comprenant un ensemble de dents de taillage (130), et la partie de taillage de haute capacité (128) de chacune de la première lame allongée (122) et de la seconde lame allongée (124) comprenant une ou plusieurs dents de taillage de haute capacité (146) qui sont plus longues que les dents de taillage (130), et
dans lequel la partie de taillage de haute capacité (128) de la première lame allongée (122) ou de la seconde lame allongée (124) comprend en outre une première dent de guidage (142), la première dent de guidage (142) étant disposée sur un premier côté (180) des une ou plusieurs dents de taillage de haute capacité (146) de la première lame allongée (122) ou de la seconde lame allongée (124),
dans lequel la partie de taillage de haute capacité (128) de la première lame allongée (122) ou de la seconde lame allongée (124) comprend en outre une seconde dent de guidage (144), la seconde dent de guidage (144) étant disposée sur un second côté (182) des une ou plusieurs dents de taillage de haute capacité (146) de la première lame allongée (122) ou de la seconde lame allongée (124), et
dans lequel la première dent de guidage (142) et la seconde dent de guidage (144) sont plus longues que les une ou plusieurs dents de taillage de haute capacité (146) de la première lame allongée (122) et de la seconde lame allongée (124).

2. Ensemble de lames selon la revendication 1, dans lequel la partie de taillage (126) de chacune de la première lame allongée (122) et de la seconde lame allongée (124) inclut une première partie de taillage et une seconde partie de taillage, et dans lequel la partie de taillage de haute capacité (128) de chacune de la première lame allongée (122) et de la seconde lame allongée (124) est située entre la première partie de taillage et la seconde partie de taillage.

3. Ensemble de lames selon la revendication 1, dans lequel la partie de taillage de haute capacité (128) de chacune de la première lame allongée (122) et de la seconde lame allongée (124) est située à proximité d'une extrémité (170 ou 172) de la première lame allongée (122) et de la seconde lame allongée (124).

4. Ensemble de lames selon l'une quelconque des revendications 1 à 3, dans lequel les une ou plusieurs dents de taillage de haute capacité (146) de la première lame allongée (122) et de la seconde lame allongée (124) ont chacune un embout affûté (152).

5. Ensemble de lames selon l'une quelconque des revendications 1 à 3, dans lequel les une ou plusieurs dents de taillage de haute capacité (146) de la première lame allongée (122) ont chacune un embout affûté (152).

6. Ensemble de lames selon l'une quelconque des revendications 1 à 3, dans lequel les une ou plusieurs dents de taillage de haute capacité (146) de la seconde lame allongée (124) ont chacune un embout affûté (152).

7. Ensemble de lames selon l'une quelconque des revendications 1 à 6, dans lequel les dents de taillage (130) de la première lame allongée (122) ou de la seconde lame allongée (124) ont chacune un embout affûté (134).

8. Ensemble de lames selon l'une quelconque des revendications 1 à 6, dans lequel les dents de taillage (130) de la première lame allongée (122) et de la seconde lame allongée (124) ont chacune un embout affûté (134).

9. Ensemble de lames selon l'une quelconque des revendications 1 à 8, dans lequel la première dent de guidage (142) et la seconde dent de guidage (144) ont chacune un embout affûté (162).

10. Ensemble de lames selon l'une quelconque des revendications 1 à 8, dans lequel la première dent de guidage (142) et la seconde dent de guidage (144) ont chacune un embout émoussé (162).

11. Ensemble de lames selon l'une quelconque des revendications 1 à 10, dans lequel la première dent de guidage (142) et la seconde dent de guidage (144) sont au moins 30 % plus longues que les une ou plusieurs dents de taillage de haute capacité (146) de la première lame allongée (122) et la seconde lame allongée (124).

12. Ensemble de lames selon l'une quelconque des revendications 1 à 11, dans lequel la première dent de guidage (142) et la seconde dent de guidage (144) sont au moins 40 % plus longues que les dents de taillage (130) de la seconde lame allongée (124).

13. Ensemble de lames selon l'une quelconque des revendications 1 à 12, dans lequel la première dent de guidage (142) et la seconde dent de guidage (144) sont au moins 60 % plus longues que les dents de taillage (130) de la première lame allongée (122), dans lequel les dents de taillage (130) de la seconde lame allongée (124) sont approximativement 40 % plus longues que les dents de taillage (130) de la première lame allongée (122), et dans lequel la première dent de guidage (142) et la seconde dent de guidage (144) sont approximativement de la même longueur.

14. Ensemble de lames selon l'une quelconque des revendications 1 à 13, dans lequel la partie de taillage de haute capacité (128) de la seconde lame allongée (124) a seulement une dent de taillage de haute capacité (146), et dans lequel la première dent de guidage (142) et la seconde dent de guidage (144) flanquent la dent de taillage de haute capacité (146) de la seconde lame allongée (124).

15. Dispositif de coupe, comprenant :
un ensemble à moteur (30) ; et
un ensemble de lames (20) selon l'une quelconque des revendications précédentes.
